# EUROPEAN PATENT APPLICATION

(11) **EP 1 093 063 A2**
(43) Date of publication of application: **18.04.2001**
(21) Application number: 00118223.7
(22) Date of filing: 01.09.2000
(51) Int. Cl.: G06F 17/60

(54) **Information sharing apparatus, information sharing method, and recording medium therefore**

(30) Priority: 02.09.1999 JP 24918999
(71) Applicant: MITSUBISHI MATERIALS CORPORATION, Chiyoda-ku, Tokyo 100-8117 (JP)
(72) Inventor: Shibata, Kosaku, Mitsubishi Materials Corporation, Minato-ku, Tokyo 105-0014 (JP); Saito, Akira, Mitsubishi Materials Corporation, Minato-ku, Tokyo 105-0014 (JP)
(74) Representative: HOFFMANN - EITLE

(57) **Abstract**

An information sharing apparatus includes an information sharing unit for providing an information sharing environment to a terminal unit. A storage unit associates at least one piece of shared information with a plurality of information sharers who share the shared information and stores a first table including a plurality of first identifiers provided for each association. The information sharing unit receives an input from one information sharer, and, when the input sets one of the first identifiers, prohibits alteration of the shared information corresponding to the first identifier.

## Description

### BACKGROUND OF THE INVENTION

### 1. Field of the Invention

The present invention relates to information sharing apparatuses and information sharing methods for sharing electronic documents by utilizing computer networks, groupware, and databases, and to recording media for recording information sharing programs.

### 2. Description of the Related Art

Recently, network environments have been organized and improved, and various network systems and groupware have been developed for use in the field of information sharing.

For example, Japanese Unexamined Patent Application Publication No. 10-124491 entitled SYSTEM FOR SHARING AND ARRANGING DOCUMENT, APPARATUS FOR MANAGING SHARED DOCUMENT, AND APPARATUS FOR GAINING ACCESS TO DOCUMENT describes an invention in which a document in a local machine is converted into a predetermined document format, and the converted document is transferred to a sharing machine through a network. The sharing machine appends a document ID to the document and stores the document. A group of documents are arranged in time order or in order of access by a user. The user can update the document using the local machine by designating a specific document ID. By using exclusive control, when a user is updating a certain document, other users are prohibited from updating the document.

Such an environment for sharing information and electronic documents demands that, responding to the necessity for a paperless environment, electronic documents should be approved in a manner similar to approving paper documents.

Hitherto, the following problems occur in approving shared electronic documents.

First, among a plurality of users sharing an electronic document, the document may be altered subsequent to approval. For example, in the invention described in Japanese Unexamined Patent Application Publication No. 10-124491, by using the exclusive control, only a document being updated is prevented from being updated by other users. At least one user can alter the document at any time.

Secondly, an electronic document is required to be printed in order to reliably approve the document, since the printed document is difficult to alter. This is an obstacle to constructing a paperless environment.

### SUMMARY OF THE INVENTION

Accordingly, it is an object of the present invention to provide an information sharing apparatus, an information sharing method, and a recording medium therefor for prohibiting alteration of a shared electronic document subsequent to approval of the electronic document.

According to an aspect of the present invention, an information sharing apparatus for sharing information formed by an electronic document includes an information sharing unit for providing an information sharing environment to one of a terminal unit included and a terminal unit connected to the information sharing apparatus. A storage unit associates at least one piece of shared information with a plurality of information sharers who share the shared information and stores a shared information table including a plurality of first identifiers provided for each association. When the information sharing unit receives an input from one information sharer and the input sets one of the first identifiers, the information sharing unit prohibits alteration of the shared information corresponding to the first identifier.

When the first identifier is set, the information sharing unit may give a first permission to the information sharer who first created the shared information. When the first identifier corresponding to another information sharer is subsequently set by the other information sharer, the information sharing unit may prohibit canceling of the former setting of the first identifier performed by the information sharer who formerly set the first identifier.

The storage unit may associate the information sharers with the shared information created by the information sharers and may store a file information table including a second identifier indicating an approved/not approved state of the shared information according to each shared information. The information sharing unit may refer to the shared information table, and, when all the first identifiers corresponding to the one piece of shared information are set, may set the second identifier corresponding to the shared information.

The storage unit may store a member information table Including personal identification information of the information sharers. Preferably, the information sharing unit refers to the shared information table, the file information table, and the member information table to determine a permission to allow access to the shared information and manages the shared information based on the correspondence between the shared information and the information sharers who share the shared information included in the shared information table, the correspondence between the information sharers and the shared information created by the information sharers included in the file information table, and the personal identification information included in the member information table.

The information sharing apparatus may be connected to the Internet. The information sharing unit may provide the information sharing environment to the terminal unit connected via a network.

According to another aspect of the present invention, an information sharing method for an information sharing apparatus includes a storage step of associating at least one piece of shared information with a plurality of information sharers who share the shared information and of storing a shared information table including a plurality of first identifiers provided for each association. In an input step, inputting by the information sharers is performed. In a prohibiting step, when one of the first identifiers is set in the input step, alteration of the shared information corresponding to the first identifier is prohibited.

According to another aspect of the present invention, a computer-readable recording medium causes a computer to execute an information sharing program installed in an information sharing apparatus. The program includes a storage step of associating at least one piece of shared information with a plurality of information sharers who share the shared information and of storing a shared information table including a plurality of first identifiers provided for each association. In an input step, inputting by the information sharers is performed. In a prohibiting step, when one of the first identifiers is set in the input step, alteration of the shared information corresponding to the first identifier is prohibited.

According to the present invention, an electronic document approval apparatus is easily provided using a computer. The creator of an electronic document is prohibited from altering the electronic document. Until unlocking of a first identifier is performed by all information sharers, the electronic document cannot be altered. Therefore, it is possible to prevent circulation of different editions of the electronic document among the information sharers and vicious interpolation of the electronic document. Also, it is possible to determine whether the electronic document is approved based on a setting state of a second identifier. Hence, when approving the electronic document, it is not necessary to print the electronic document on paper which is difficult to alter, and the electronic document is managed as it is.

### BRIEF DESCRIPTION OF THE DRAWINGS

Fig. 1 is an illustration of the structure and the usage configuration of an information sharing apparatus according to a first embodiment of the present invention;
Fig. 2 is an illustration of the data structure of a member information table;
Fig. 3 is an illustration of the data structure of a file information table;
Fig. 4 is an illustration of the data structure of a shared information table;
Fig. 5 is an illustration of an example of a file uploading screen on a web browser;
Fig. 6 is an illustration of an example of a file locking screen on the web browser;
Fig. 7 is an illustration of an example of a message screen on the web browser;
Fig. 8 is an illustration of an example of a file unlocking screen on the web browser;
Fig. 9 is a flowchart showing a process performed by a platform program when uploading a file;
Fig. 10 is a flowchart showing a process performed by the platform program when performing file locking (file unlocking is omitted);
Fig. 11 is a diagram of the system structure of an information sharing system according to a second embodiment of the present invention;
Fig. 12 is an illustration of the program structure of a web server in the information sharing system of the second embodiment;
Fig. 13 is an illustration of the table structure of a database (DB) server in the information sharing system of the second embodiment;
Fig. 14 is an illustration of the access relationship between the platform program/service item program and database tables;
Figs. 15A to 15C are illustrations of the structures of master tables;
Fig. 16A and 16B are illustrations of the structures of sub-master tables;
Fig. 17 is an illustration of the structure of a data table;
Fig. 18 is a flowchart showing platform program processing;
Fig. 19 is a flowchart showing the platform program processing using a specific example;
Fig. 20 is an illustration of an example of a terminal screen displaying a login screen;
Fig. 21 is an illustration of an example of a terminal screen displaying a list of divisions;
Fig. 22 is an illustration of an example of a terminal screen displaying a list of functions;
Figs. 23A to 23C are flowcharts each showing service item program processing;
Figs. 24A to 24C are flowcharts each showing the service item program processing using a specific example;
Fig. 25 is an illustration of a retrieval result;
Fig. 26 is an illustration of a terminal screen displaying the retrieval result shown in Fig. 25;
Fig. 27 is an illustration of another retrieval result;
Fig. 28 is an illustration of a terminal screen displaying the retrieval result shown in Fig. 27;
Fig. 29 is an illustration of an example of a screen displaying a filing cabinet;
Fig. 30 is an illustration of the usage configuration of another embodiment of the present invention;
Fig. 31 is an illustration of an example of a form document transmitted from a facsimile machine; and
Figs. 32A to 32C are illustrations of form documents including photographs which are transmitted from the facsimile machine.

### DESCRIPTION OF THE PREFERRED EMBODIMENTS

The present invention will be understood from the following description of the preferred embodiments with reference to the accompanying drawings.

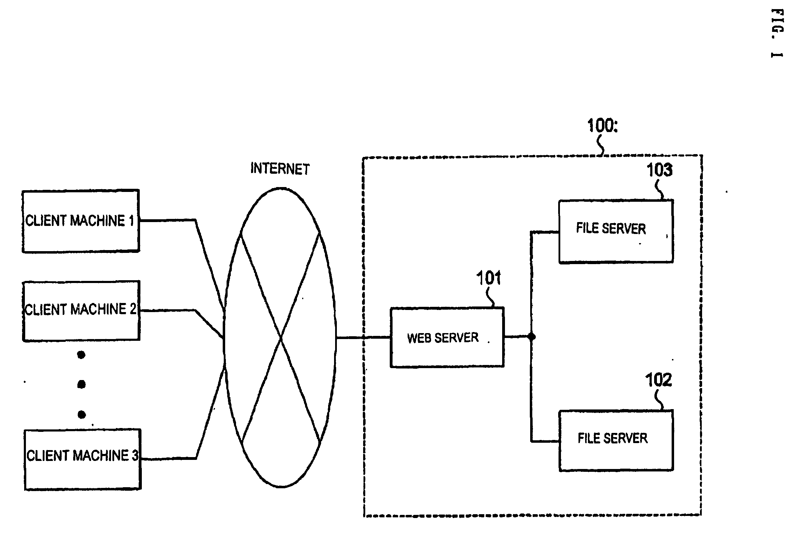

Fig. 1 shows the structure and the usage configuration of an information sharing apparatus according to a first embodiment of the present invention. An information sharing apparatus 100 of the first embodiment may be incorporated in an information sharing system described in Japanese Patent Application No. 11-054830, which is proposed by the assignee of the present invention. The proposed information sharing system uses a network such as the Internet. The information sharing system according to a second embodiment of the present invention is described in detail in the following description.

The information sharing system 100 of the first embodiment includes a web server 101 in which a platform program is installed. The web server 101 executes the platform program for providing a plurality of terminal units (client machines 1, 2, ... and n) connected thereto through the Internet with an information sharing environment. The information sharing system 100 further includes a database server 102 for storing various tables and a file server 103 for storing electronic documents (files) including text documents, images, and audio files.

A web browser as front-end application software is installed in each of the terminal units. Each terminal unit gains access through the Internet to the web server 101 constructing the information sharing apparatus 100. The platform program on the web server 101 uses scripts to write HTML source files and provides each terminal unit with services concerning file sharing. The tables stored in the database server 102 are configured so that they are not registered or modified except when the platform program is used. The file server 103 is configured so that the files are not uploaded, downloaded, overwritten, edited, or deleted except when the platform program is used. These settings are performed by functions of an operating system installed in the web server 101.

The web server 101, the database server 102, and the file server 103 constructing the information sharing apparatus 100 may use separate server machines. Alternatively, a single server machine may be used to implement the web server 101, the database server 102, and the file server 103. Peripheral units including an input device and a display device (not shown) are connected to the web server 101, the database server 102, and the file server 103. The input device includes a keyboard and a mouse. The display device includes a cathode ray tube (CRT) and a liquid crystal display device.

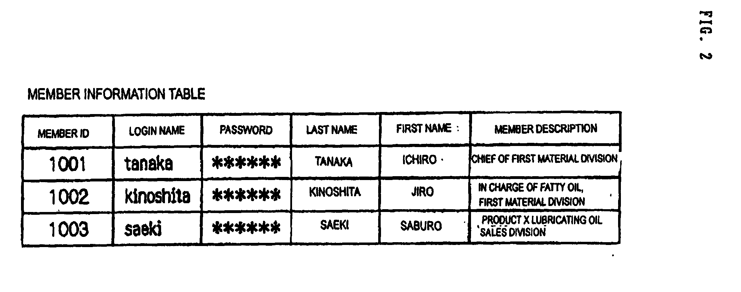

Referring to Figs. 2 to 4, the tables which are stored in the database server 102 and which are used by the information sharing apparatus 100 are described. The information sharing apparatus 100 uses the following tables.

First, a member information table (see Fig. 2) for storing member information is used. In the embodiment, the member information table includes fields of "member ID", "login name", "password", "last name", "first name", and "member description". Corresponding data is stored according to each member. A member is a user permitted and registered to use the information sharing apparatus 100.

The "member ID" field stores a unique number allocated to each member. The "login name" field stores a name which is paired with a password used to verify the user. The "password" field stores a character string which is set to verify whether the user is a valid member. Referring to Fig. 2, the character string is represented by asterisks (*). Actually, an encrypted character string is stored. The "last name" field and the "first name" field separately store the last name and the first name of a member, respectively. The "member description" field stores a character string indicating a division to which the member belongs and a title of the member.

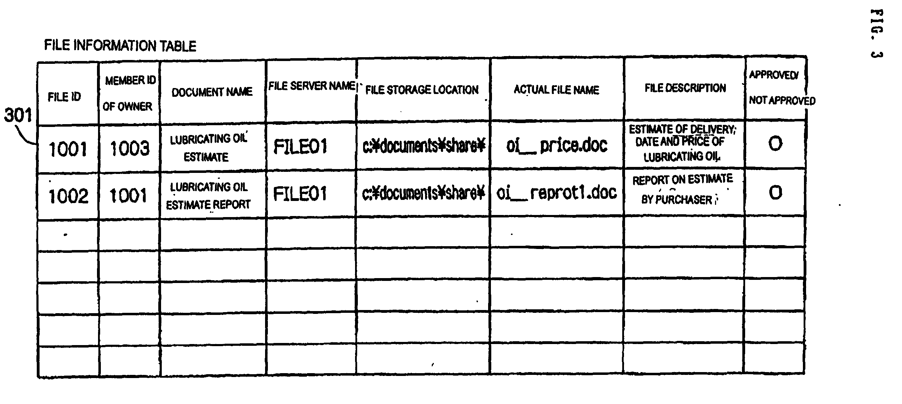

Secondly, a file information table (see Fig. 3) for storing file information, which is the electronic document entity, is used. In the embodiment, there are fields of "file ID", "member ID of owner", "document name", "file server name", "file storage location", "actual file name", "file description", and "approved/not approved". Corresponding data is stored according to each entry. The "file ID" field stores a unique number allocated to each file. The "member ID of owner" stores the member ID of a member who created (registered) the file. The number stored in the "member ID of owner" field must be included in the "member ID" field of the member information table.

The "document name" field stores the file name which is used as a heading. The "file storage location" field stores the directory name representing the position of a directory in the file server 103 at which the file entity is stored. The "actual file name" field stores the file name in a computer. A shared file is stored with this file name in a storage unit, such as a hard disk, of the file server 103. The "file description" field stores a description of the content of the stored file. The "approved/not approved" field stores data representing whether the file is approved. When zero is stored, the file is not approved. When one is stored, the file is approved.

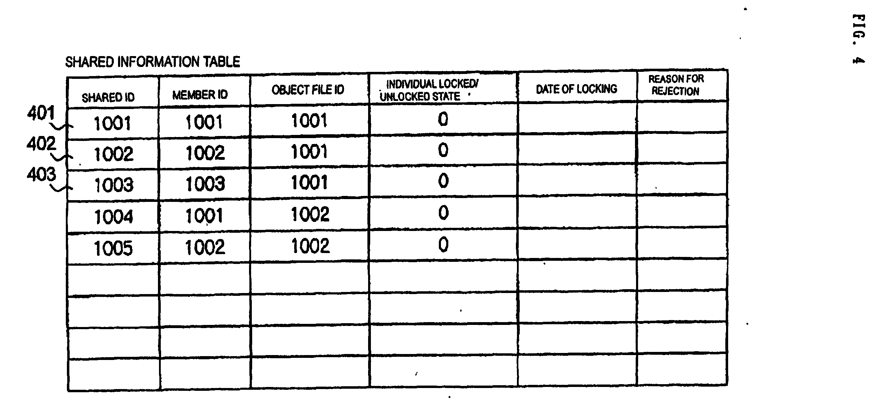

Thirdly, a shared information table (see Fig. 4) for storing information indicating which file is shared by which member is used. In the embodiment, there are fields of "shared ID", "member ID", "object file ID", "individual locked/unlocked state", "date of locking", and "reason for rejection". Corresponding data is stored according to each entry. The "shared ID" field stores a unique number allocated to a sharing state of each file. The "member ID" field stores the ID number of a target member. This number must be included in the numbers stored in the "member ID" field of the member information table (Fig. 2). The "object file ID" field stores the ID number of an object file. This number must be included in the numbers stored in the "file ID" field of the file information table (Fig. 3).

The "individual locked/unlocked state" stores data indicating whether the member represented by the "member ID" has locked the file represented by the "object file ID". If zero is stored, the file is not locked. If a number other than zero is stored, the file is locked. When the owner locks the file, one is stored. Subsequently, a number according to the order of locking is stored. For example, when the file is locked for the second time, two is stored. The "date of locking" field stores the date and the time at which the file is locked. The "reason for rejection" field stores a reason why the file cannot be locked.

According to the information sharing apparatus 100, an object file is approved when all appropriate members have locked the object file. Specifically, when all the appropriate members have locked the object file, one is stored in the corresponding "approved/not approved" field of the file information table. In the "approved/not approved" field, the stored number is reset to zero when the last member who has locked the object file unlocks the file.

The operation of the information sharing apparatus 100 of the embodiment is described. The web server 101 executes the platform program for performing the following processing steps.

The information sharing apparatus 100 verifies the user, i.e., the member. When the user gains access to the web server 101 from the terminal unit, the web server 101 transfers an HTML document constructing a verification screen asking the user to input a login name and a password for verification. A web browser provided with the terminal unit displays the verification screen. The user inputs his/her login name and password, and the terminal unit transfers the data to the web server 101. The web server 101 compares the transferred login name and password with login names and passwords included in the member information table stored in the database server 102, and performs verification. When the user is verified as a member, the member is permitted to upload, edit, modify, or delete an electronic document which will be used as shared information.

Next, a process of uploading an electronic document subsequent to the above verification is described.

When the user is verified, the user selects uploading of the electronic document from a menu screen (not shown) displayed on the web browser. The screen is switched to an input screen for uploading.

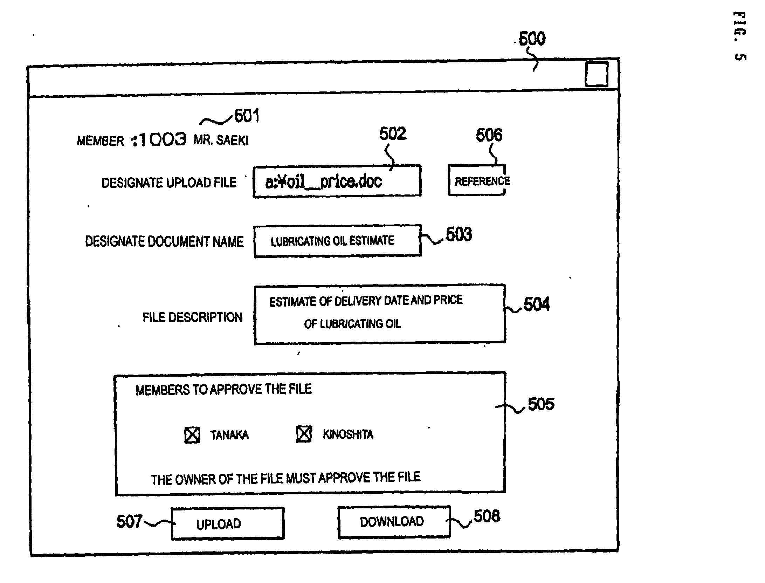

For example, a web browser 500 displays an input screen as shown in Fig. 5. In the screen, a section 501 displays the member ID (1003) and the name (Saeki) of the verified member. The input screen includes an upload file input field 502 for designating an upload file, a document name input field 503 for designating the document name, a file description input field 504 for inputting a file description, and a check box field 505 for designating a member or members, among registered members of the information sharing apparatus 100, who will share or approve the file. The check box field 505 is displayed based on the data stored in the member information table. The input screen further includes a reference button 506 for referring to the file when designating the upload file, an upload button 507 for actually causing the uploading to start, and a cancel button 508 for canceling the uploading.

A member (the owner of the file, whose member ID is 1003) who designates the file to be uploaded designates, in the upload file input field 502, the file (in this example, oil_price.doc) stored in the terminal unit from the input screen.

Next, the member inputs the document name (in this example, a lubricating oil estimate) in the document name input field 503 and inputs the file description (in this example, an estimate of the delivery date and the price of the lubricating oil) in the file description input field 504.

The member designates other members who will share the file. Specifically, members (in this example, Tanaka and Kinoshita) who will approve the file are checked in the respective check boxes 505.

At last, the member pushes the upload button 507.

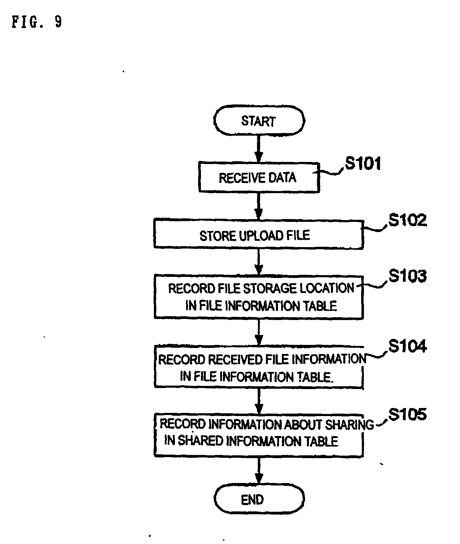

With the above processing steps, the input data (the file name, the document name, the file description, the member IDs of the sharing members) and the designated file (electronic document) are transferred to the web server 101. Referring to Fig. 9, in step S101, the web server 101 receives the data transmitted from the terminal unit. In step S102, the web server 101 transfers the received file to the file server 103 and the file server 103 stores the file. In step S103, the file storage location is recorded in the "file storage location" field of the file information table of the database server 102. Specifically, in the example shown in Fig. 3, the directory name "c:¥documents¥share¥" is recorded in the "file storage location" field of a record 301.

In step S104 in Fig. 9, the information (the file name, the document name, and the file description) about the received file, and the member ID (1003) of the verified member as the member ID of the file owner are transferred to the database server 102 and recorded in the file information table. Hence, as shown in Fig. 3, the data is recorded in the record 301 of the file information table.

In step S105, the data (the member IDs 1001 and 1002 of the sharing members) concerning sharing of the received file and the file ID (1001) set in the record 301 of the file information table in which the file information is recorded are transferred to the database server 102, and the data is recorded in the sharing information table. Hence, as shown in Fig. 4, the data is recorded in records 401 to 403 of the shared information table.

The process of uploading the electronic document subsequent to the verification of the user is described as above.

Next, a process of locking and approving the shared file is described using the above example in which the uploading process was described.

It is assumed that the file (electronic document) whose file ID is 1001 is to be approved. The file with the file ID 1001 is shared by three members whose member IDs are 1001, 1002, and 1003.

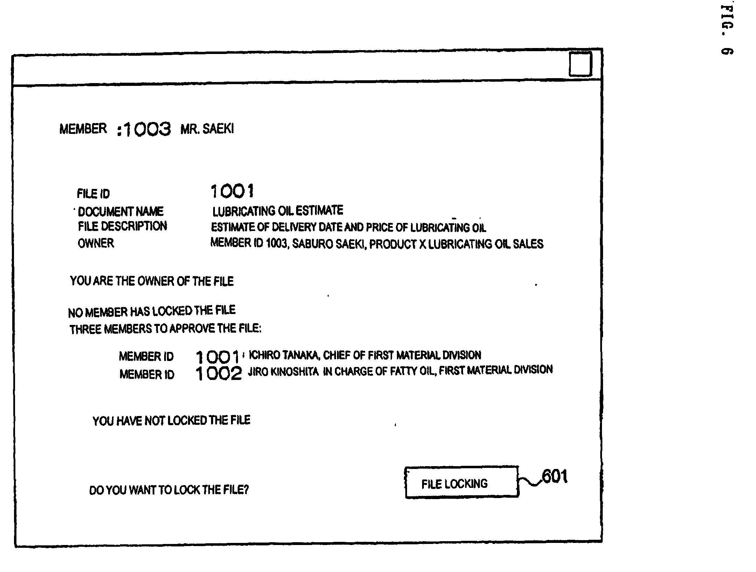

First, the owner (member ID 1003) of the file with the file ID 1001 reads the file (electronic document). Then, the screen displayed on the web browser changes from a menu screen to a file locking screen. Fig. 6 shows an example of a file locking screen. The owner of the file takes the lead and presses a file locking button 601 shown in Fig. 6 by, for example, clicking the mouse. Hence, the file is locked.

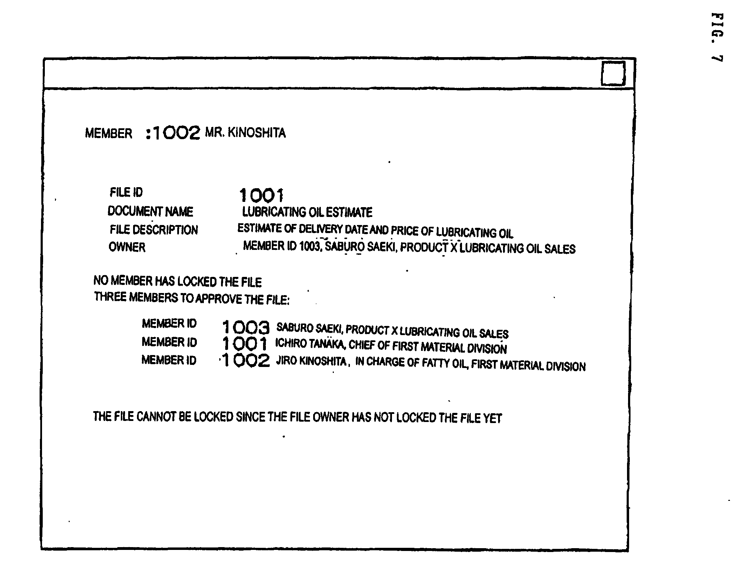

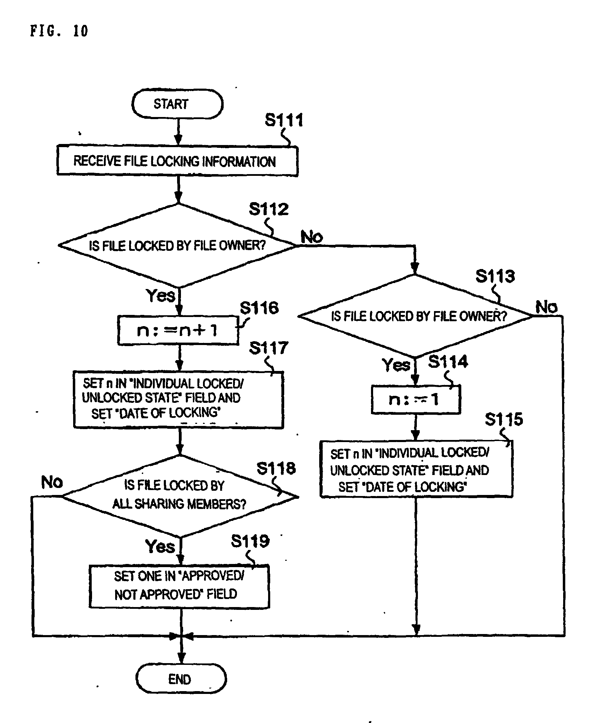

According to the information sharing apparatus 100, it is set that the sharing members other than the file owner are prohibited from locking the file with the file ID 1001 (steps S111 to S113 in Fig. 10). Specifically, the file owner is the first person to lock the file. The members other than the file owner are also prohibited from overwriting the file entity or editing the file information table in the database. The platform program executed on the web server 101 monitors the shared information table. When the file is not locked at all, a message screen is displayed indicating that the members other than the file owner cannot lock the file. Fig. 7 shows an example of this message screen.

When the owner of the shared file locks the file, one is set in the "individual locked/unlocked state" field of the record 403 including the member ID 1003 and the object file ID 1001 in the shared information table. The "date of locking" field in the same record 403 stores the time and the date at which the file is locked. These processing steps are performed in steps S111 to S115. At the time the file is locked, the file owner (member ID 1003) is prohibited from modifying the content of the file (file ID 1001). Needless to say, all the members including the file owner are prohibited from modifying the file (file ID 1001) and the tables in the database.

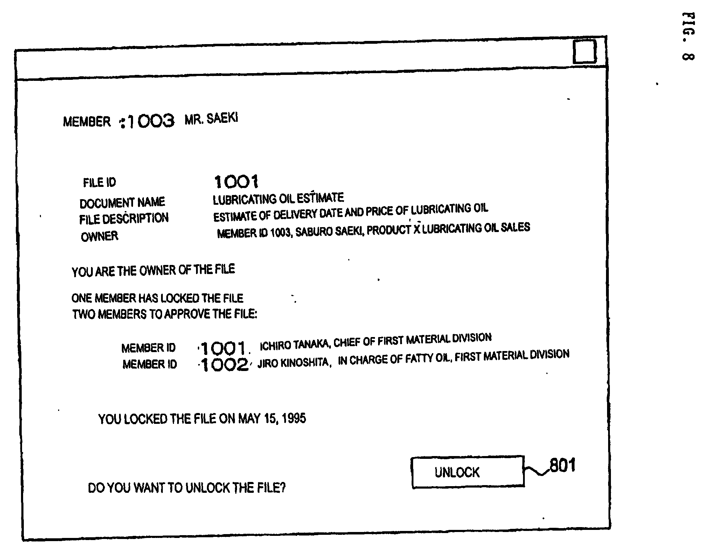

The file owner (member ID 1003) is permitted to unlock the file which has been locked by the file owner until the file is locked by the other sharing members. When one of the sharing members locks the file, the file owner cannot unlock the file which has been locked by the file owner. In order to unlock the file, the menu screen displayed on the web browser is changed to an unlocking screen. Fig. 8 shows an example of the display screen. The owner of the file presses an unlock button 801, and the file is thus unlocked. At the same time, the web server 101 resets the value in the "individual locked/unlocked state" field in the record 403 of the shared information table to zero.

When the file owner (member ID 1003) locks the file (file ID 1001), the other sharing members (member IDs 1001 and 1002) who are to approve the file are now permitted to lock the file.

Next, when the sharing member (member ID 1002) thoroughly reads the file with the file ID 1001 and approves the file, the menu screen is changed to the file locking screen (similar to that shown in Fig. 6), and the member (member ID 1002) locks the file. The web server 101 sets two in the "individual locked/unlocked state" field in the record 402 including the member ID 1002 and the object file ID 1001 in the shared information table of the database server 102. The date and the time at that moment are stored as the "date of locking" field. These processing steps are performed in steps S111 to S117 in Fig. 10.

At this time, the file owner (member ID 1003) is prohibited from unlocking the file with the file ID 1001. In contrast, the sharing member (member ID 1002) can unlock the file as long as the sharing member (member ID 1001) who has not locked the file locks the file.

When the sharing member (member ID 1001) thoroughly reads the file with the file ID 1001 and approves the file, the menu screen is changed to the file locking screen (similar to that shown in Fig. 6). Then, the sharing member (member ID 1001) locks the file. The web server 101 sets three in the "individual locked/unlocked state" field in the record 401 including the member ID 1001 and the object file ID 1001 in the shared information table in the database server 102. The time and the date at that moment are stored in the "date of locking" field. These processing steps are performed in steps S111 to S117.

At this time, the member (member ID 1002) who locked the file second is prohibited from unlocking the file. The sharing member (member ID 1001) is permitted to unlock the file. In order that all three sharing members unlock the file, unlocking is performed in the reverse order from the locking order, starting with the member (member ID 1001) who locked the file last. When all the sharing members have unlocked the file, the file owner can modify the file.

When it is determined, in step S118, that the file is locked by all the sharing members (member IDs 1001, 1002, and 1003) who are to approve the file (file ID 1001), the web server 101 sets, in step S119, one in the "approved/not approved" field in the record 301 including the file ID 1001 in the file information table in the database server 102. Hence, the file (file ID 1001) is approved. The "date of locking" performed last by the last sharing member (member ID 1001), which is stored in the shared information table, is recorded as the date of approval. When the member who locked the file last unlocks the file, the value in the "approved/not approved" field in the record 301 including the file ID 1001 of the file information table is reset to zero indicating that the file is not approved.

Accordingly, the uploaded file is reliably approved by the designated members (sharing members) who are to approve the file. The above processing may be performed by four or more members who are to approve the file. In the embodiment, the locked file can be unlocked. Alternatively, If unlocking of the locked file is prohibited, a new file is created when modifying the file.

The information sharing apparatus 100 of the first embodiment is described in detail as above.

An information sharing system, into which the information sharing apparatus of the present invention is incorporated, according to a second embodiment of the present invention is described with reference to the accompanying drawings. Characteristics of the information sharing system are described below.

The information sharing system, which can be connected to the Internet, includes an information management device and an information accumulating device for accumulating shared information. The information management device includes an information management unit and a plurality of information providing units. In response to an information input/output request from a terminal unit via a network, the information management unit controls inputting and outputting of the shared information between the terminal unit and the information management device. In response to the information input/output request, each of the information providing units performs inputting and outputting of the corresponding shared information from the information accumulating device between the information management unit and the information accumulating device. The shared information is transmitted in a format particular to each of the information providing units.

In the information sharing system, according to each user who gains access to the information sharing system from the terminal unit, the information accumulating device can set a sharing group to which the user belongs and the information providing units available to the user.

In the information sharing system, the shared information includes data to which three types of identifiers are appended. The three types include an identifier indicating a person who has input data included in the shared information, another identifier indicating a group that shares the shared information, and another identifier indicating the information providing unit to be employed to input/output the shared information. The information management unit and the information providing units use the three types of identifiers to control inputting and outputting of the shared information.

In the information sharing system, the information accumulating device has a table structure including three main tables for storing management information for the three types of identifiers, at least one sub-table for storing the relational information between two types of identifiers among the three types of identifiers, and at least one data table for storing the shared information.

In the information sharing system, the information management unit transmits input/output screen displaying information for causing the terminal unit to display an input/output screen including three fields. A shared information classification field indicates a directory in which the shared information, which is classified in response to the information input/output request, is stored or will be stored. In the shared information classification field, a directory to/from which the shared information is input/output is selected. A shared information list displaying field displays a list of shared information in response to the output request to output the shared information. In the shared information list displaying field, the shared information is selected. A shared information content displaying field displays the content of the shared information in response to the input request to input the shared information.

According to the information sharing system, it is possible to gain access to the shared information from the input/output screen by simple processing steps.

In the information sharing system, the information management device can receive a facsimile via a public telephone circuit network. The information management unit verifies the connection with a facsimile machine. If the connection is verified to be valid, form information transmitted from the facsimile machine is received. The form information is stored in the information accumulating device through one of the information providing units. The form information is stored as the shared information in a recoverable format. When outputting the form information, the information providing unit transmits a file in the recoverable format.

The form information stored as the shared information in the recoverable format can be reconstituted and displayed (output) in the original format. Alternatively, the form information can be stored as, for example, image data.

According to the information sharing system, a widely-used facsimile machine is employed as an input device for inputting the shared information, thereby reducing the cost. Also, it is possible to share the content of the form information, such as a paper document created at a remote place.

The information sharing system of the second embodiment is described with reference to the drawings.

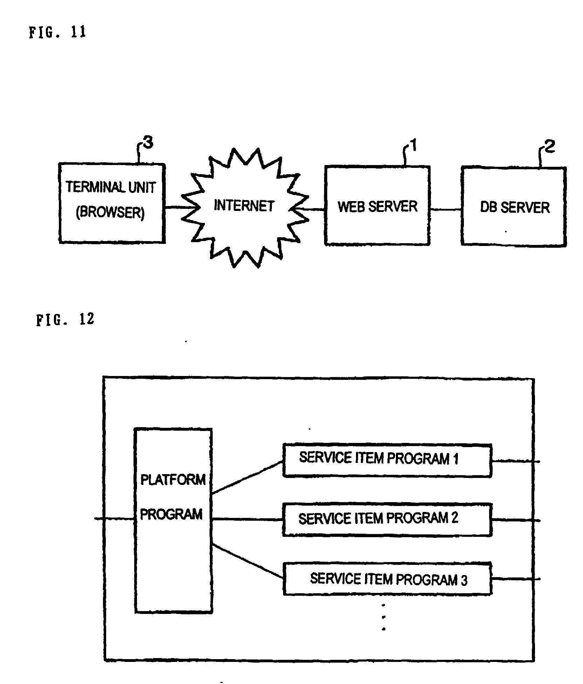

Fig. 11 shows a system configuration of the information sharing system of the second embodiment. The information sharing system includes a web server 1 which is used as the information management device and which can be connected to the Internet, and a database (DB) server 2 used as the information accumulating device. Terminal units 3 (only one terminal unit is shown in Fig. 11) are connected to the Internet. The user gains access from the terminal unit 3 to the information sharing system using an internet browser (hereinafter referred to as a "browser") installed in the terminal unit 3. Alternatively, the information sharing system may Include a plurality of web servers 1 and DB servers 2. Also, the web server 1 and the DB server 2 may be formed of a single computer. A database on the DB server 2 is a relational database.

Fig. 12 shows a program structure of the web server 1. A connection request from the terminal unit 3 is processed by a platform program which is used as the information management unit. The platform program provides an information sharing environment to the terminal unit 3. Service item programs are used as the information providing units. The platform program designates a service item program using the identifiers, and the designated service item program gains access to the database on the DB server 2. Each service item program has a unique function which is separately determined. The type of data processed by each service item program and the data display format of the browser of the terminal unit 3 are separately determined according to each service item program. According to the second embodiment, shared information is transmitted as an HTML document from the platform program to the browser of the terminal unit 3. Alternatively, the shared information can be transmitted in other formats.

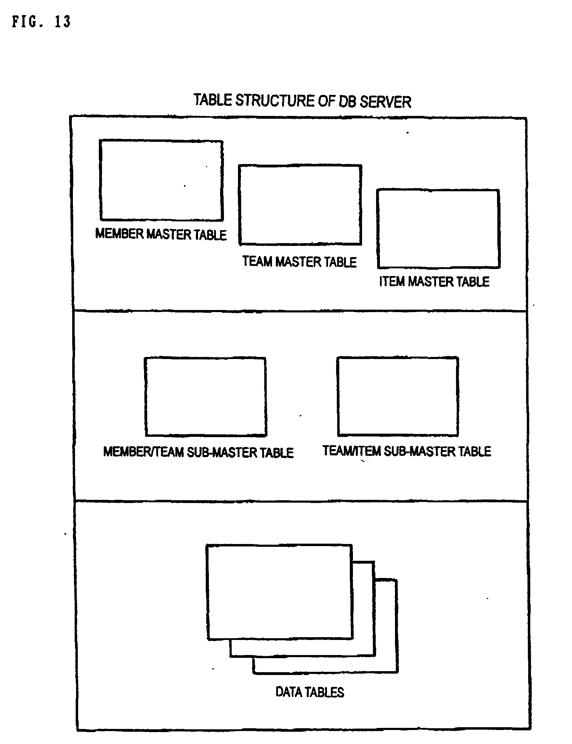

Fig. 13 shows a table structure of the DB server 2. The tables are divided into three categories. A first category includes three types of master tables, namely, a member master table, a team master table, and an item master table, which are used as main tables for storing management information according to each identifier. A second category includes sub-master tables, namely a member/team sub-master table and a team/item sub-master table, which are used as secondary tables for storing the relational information between the identifiers. A third category includes data tables for storing the shared information. These tables can be set by a setting method which is separately determined in the DB server 2. According to each user who gains access from the terminal unit 3 to the information sharing system of the second embodiment, sharing groups to which the user belongs and functions provided by available service item programs are managed based on these tables.

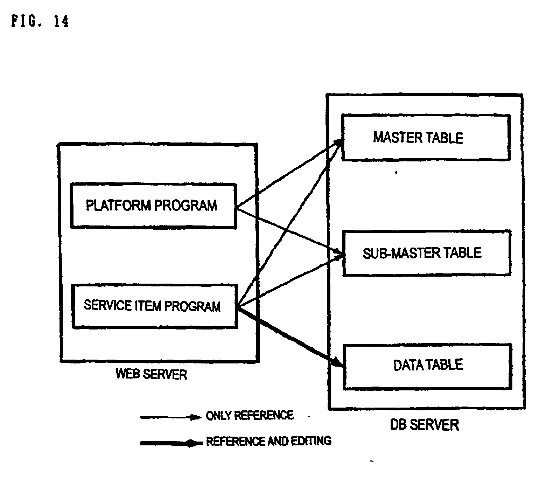

Fig. 14 shows the relationship between the programs on the web server 1 and the tables on the DB server 2 to which access is gained by these programs. The platform program gains access to the master table and the sub-master table and constructs the information sharing environment. The service item program mainly gains access to the data table in order to share the information. As circumstances demand, the service item program may refer to the master table and the sub-master table.

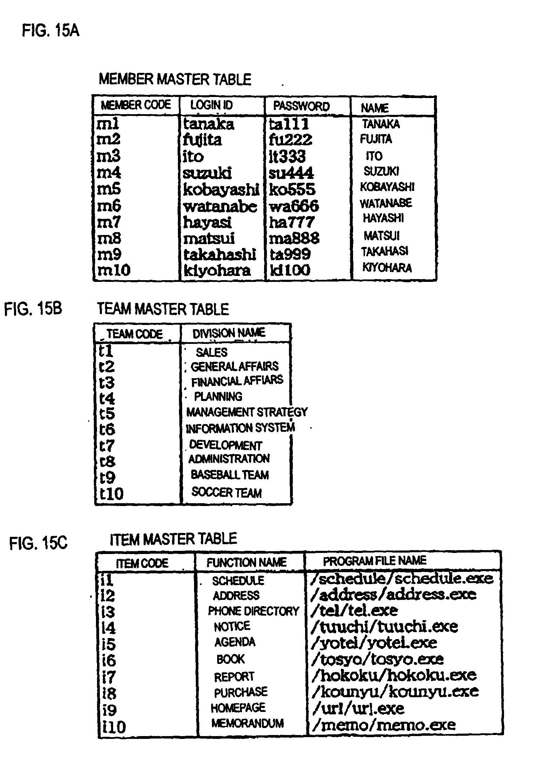

Figs. 15A to 15C show examples of the master tables. Each master table includes information on one type of identifier (code). There are three types of master tables. The member master table (see Fig. 15A) manages information on each member who inputs information. The team master table (see Fig. 15B) manages sharing group information. The item master table (see Fig. 15C) manages information on functions executed by the service item programs.

Referring to Fig. 15A, the member master table includes member codes, login IDs, passwords, and names. Referring to Fig. 15B, the team master table includes team codes and division names. Referring to Fig. 15C, the item master table includes item codes, function names, and program file names.

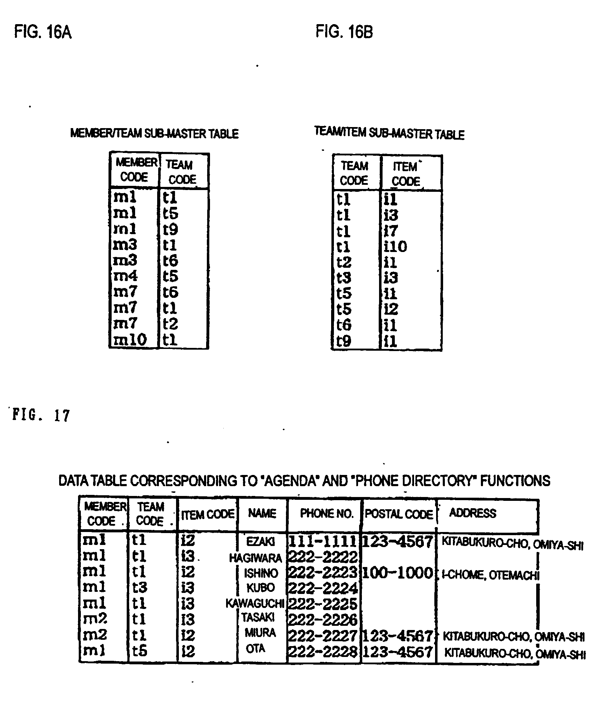

Figs. 16A and 16B show examples of the sub-master tables. Each sub-master table includes information on two types of identifiers (codes), and records the relationship between each element managed by the sub-master table. There are two types of sub-master tables, namely the member/team sub-master table (see Fig. 16A) for recording the relationship between the member and the group to which the member belongs, and the team/item sub-master table (see Fig. 16B) for recording the relationship between the group and the function.

Referring to Fig. 16A, the member/team sub-master table includes member code information and team code information. Referring to Fig. 16B, the team/item sub-master table includes team code information and item code information.

Fig. 17 shows an example of the data table. The data table includes information on three types of identifiers (codes) and stores data to be shared. In this example, the data is shared using an "address" function and a "phone directory" function. The data table includes member codes, team codes, item codes, names, phone numbers, postal codes, and address information.

Next, the operation of the information sharing system of the second embodiment in response to the operation of the terminal unit 3 connected to the Internet is described.

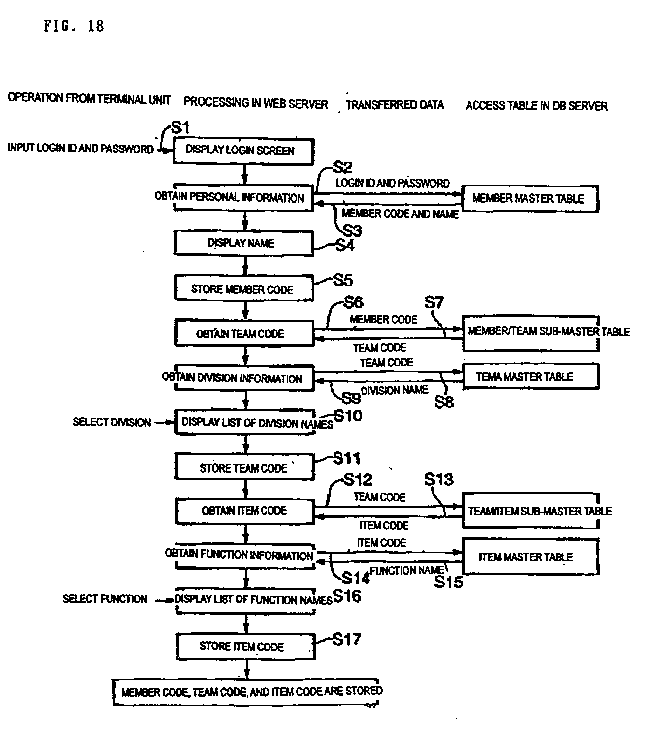

Fig. 18 shows a process executed by the platform program. In step S1, a user who is to gain access from the terminal unit 3 to the shared information inputs a login ID and a password in a login screen. The login ID and the password are transferred from the browser of the terminal unit 3 to the platform program through the Internet.

In step S2, the platform program transfers the login data input in step S1 to the DB server 2, and the DB server 2 searches the member master table.

When the member code corresponding to the login ID and the password is retrieved in step S2, the DB server 2 transfers, in step S3, the member code and associated personal information including the name to the platform program.

When the data is received by the platform program, the platform program transfers the personal information including the name to the browser of the terminal unit 3 through the Internet. In step S4, the browser displays the personal information on a screen of the terminal unit 3, and the login operation is thus completed.

In step S5, the platform program stores the member code in a memory region of the web server 1 which is used by the platform program.

In step S6, the platform program transfers the member code stored in the memory region to the DB server 2, and the DB server 2 searches the member/team sub-master table.

When the team code corresponding to the member code is retrieved in step S6, the DB server 2 transfers, in step S7, the team code to the platform program. When there are plural team codes corresponding to the member code, all the team codes are transferred.

In step S8, the platform program receives these team codes and transfers the received team codes to the DB server 2, and the DB server 2 searches the team master table.

In step S9, the DB server 2 transfers the associated information including the division name to the platform program.

The platform program receives the data and transfers a list of division names to the browser of the terminal unit 3 through the Internet. In step S10, the browser displays the list of division names on the screen of the terminal unit 3. The user refers to the list of division names displayed on the screen, and selects a target division. Information on the selected division is transferred from the browser to the platform program through the Internet.

In step S11, the platform program stores the team code of the division selected in step S10 in the memory region of the web server 1 which is used by the platform program.

In step S12, the platform program transfers the team code stored in the memory region to the DB server 2, and the DB server 2 searches the team/item sub-master table.

When the item code corresponding to the team code is retrieved in step S12, the DB server 2 transfers, in step S13, the item code to the platform program. When there are plural item codes corresponding to the team code, all the item codes are transferred.

In step S14, the platform program receives these item codes and transfers the received item codes to the DB server 2, and the DB server 2 searches the item master table.

In step S15, the DB server 2 transfers the associated information including the corresponding function name to the platform program.

The platform program receives the data and transfers a list of function names to the browser of the terminal unit 3 through the Internet. In step S16, the browser displays the list of function names on the screen of the terminal unit 3.

The user refers to the list of function names displayed in step S16 on the screen of the terminal unit 3, and selects a target function. The browser of the terminal unit 3 transfers the selected information to the platform program through the Internet. In step S17, the platform program stores the item code of the selected function in the memory region of the web server 1 which is used by the platform program.

When the processing in step S17 is completed, three codes, namely the member code, the team code, and the item code, are stored in the memory region, thereby providing an environment for executing the service item program designated by the item code.

The process performed by the platform program is described as above.

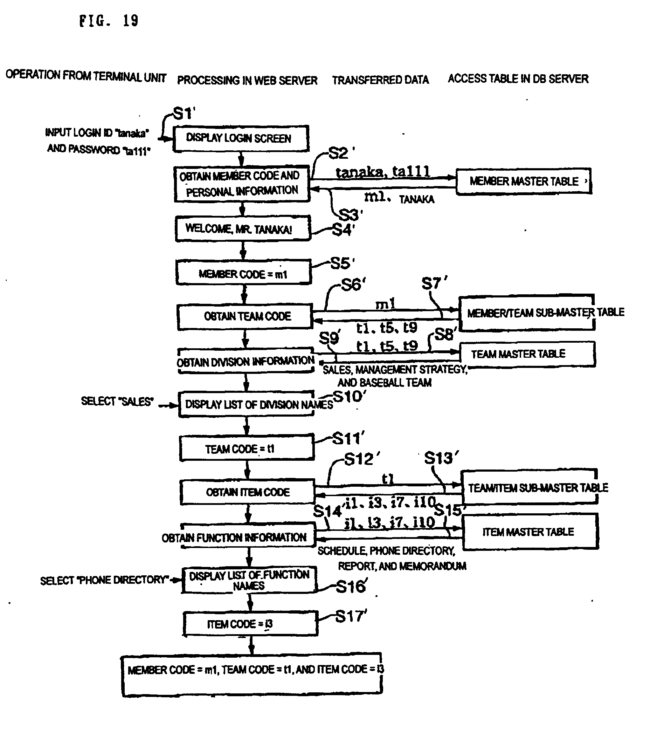

Next, a specific example of the process performed by the platform program is described with reference to Fig. 19.

In the following example, Mr. "Tanaka" is going to use the "phone directory" function of the "sales" division. The process flow is similar to that described above, and a detailed description thereof is omitted.

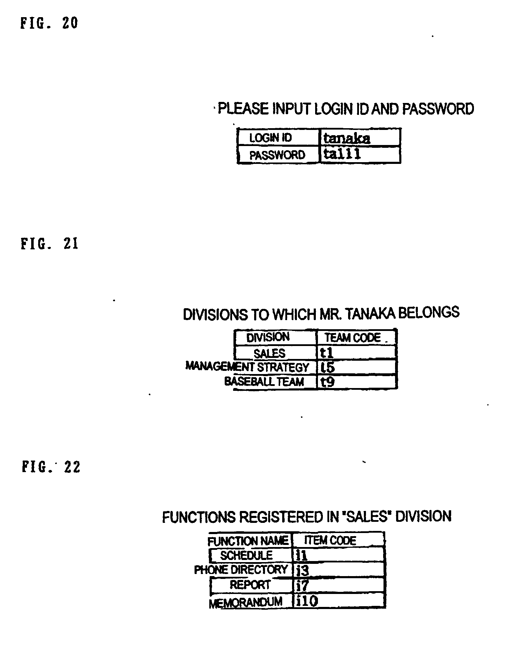

In step S1', the user, i.e., Mr. "Tanaka", inputs his login ID "tanaka" and password "ta111" in a login screen shown in Fig. 20.

The process searches the member master table shown in Fig. 15A. In step S3', the member code "m1" and the name "Tanaka" are retrieved and are transferred to the platform program.

When the display screen indicates that logging in is completed, the team codes "t1, t5, and t9" to which the member code "m1" belongs are successively retrieved in steps S6' and S7'. In step S10', the terminal unit 3 displays information on the "sales, management strategy, and baseball team" divisions to which Mr. "Tanaka" belongs.

In step S10', the user, namely, Mr. Tanaka, selects the "sales" division from a list of divisions shown in Fig. 21.

The team code corresponding to the "sales" division is "t1". Successively, item codes "i1, i3, i7, and i10" corresponding to the team code "t1" are retrieved in step S13'. In step S16', the terminal unit 3 displays information on the "schedule, phone directory, report, and memorandum" functions registered in the "sales" division.

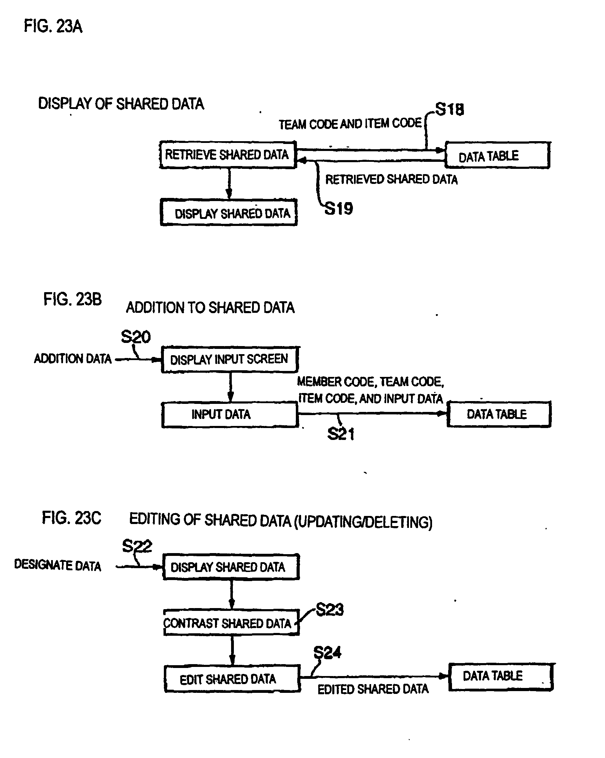

In step S16', the user, namely, Mr. Tanaka, selects the "phone directory" function from a list of functions shown in Fig. 22. The item code corresponding to the "phone directory" function is "i3".

Accordingly, Mr. "Tanaka" is ready to use the "phone directory" function of the "sales" division. The platform program executes the service item program corresponding to the item code "i3", and transfers an HTML document having the "phone directory" function to the browser of the terminal unit 3. Hence, the HTML document with the "phone directory" function is displayed.

Figs. 23A to 23C illustrate processing performed by the service item program. The service item program uses the member code, the team code, and the item code stored in the memory of the web server 1 to perform processing. Processing performed by the service item program is separately determined depending on the functions. In the following description, examples of displaying, adding, and editing (updating or deleting) data are described.

Referring to Fig. 23A, displaying of the shared data is described. In step S18, the team code and the item code stored in the memory of the web server 1 are transferred to the DB server 2, and the DB server 2 searches the data table. When data corresponding to the team code and the item code is retrieved, the retrieved data is used as a display record. In step S19, the display record is transferred through the service item program to the platform program. The platform program transfers the display record to the browser of the terminal unit 3 through the Internet. The browser of the terminal unit 3 displays the display record on the screen.

Referring to Fig. 23B, addition to the shared data is described. In step S20, a record to be added, which is an addition record, is input from the terminal unit 3. The browser of the terminal unit 3 transfers the addition record to the platform program through the Internet. In step S21, the addition record is transferred to the DB server 2 along with the member code, the team code, and the item code. The addition record is stored in a predetermined data table. The data table in which the addition record is to be stored is designated by the service item program.

Referring to Fig. 23C, editing (updating or deleting) of data is described. In step S22, the user designates, in a state in which the shared information is displayed, data to be edited. Information involved in designating the data to be edited is transferred from the browser to the platform program, which in turn is transferred to the service item program.

In step S23, the service item program contrasts the member code, the team code, and the item code with the member code, the team code, and the item code of the designated data. When the user is permitted to edit the designated data, the browser of the terminal unit 3 displays an edition screen through the Internet, and the user edits the data through the browser. The updated shared data is transferred from the browser to the platform program, which in turn is sent to the service item program. The service item program transfers the shared data along with the member code, the team code, and the item code to the DB server 2, and the DB server 2 stores the data in a predetermined data table.

Processing performed by the service item program is described as above.

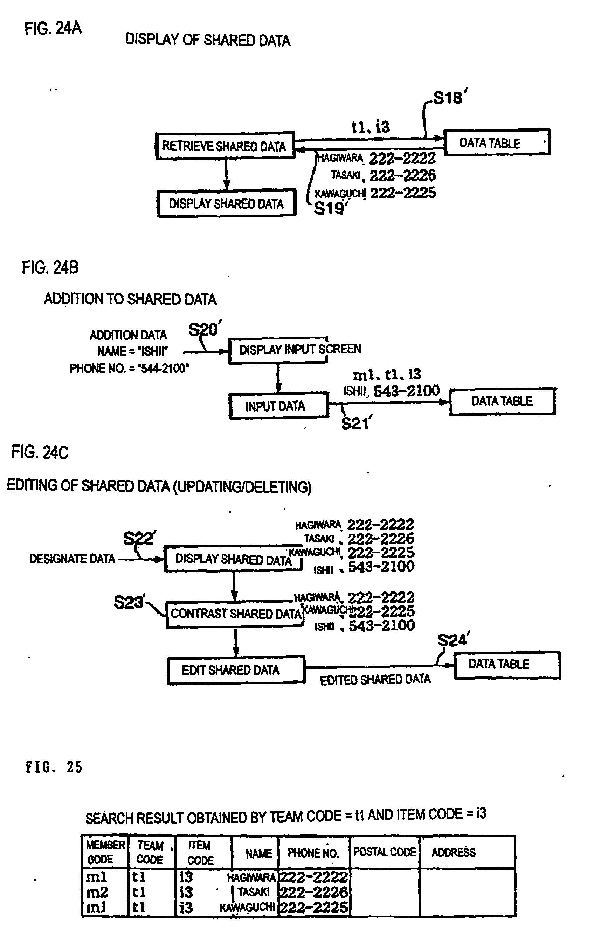

Referring now to Figs. 24A to 24C, specific examples of processing performed by the service item program are described.

In the following description, Mr. "Tanaka" is to use the "phone directory" function of the "sales" division. The process flow is similar to that described above, and a detailed description thereof is omitted.

It is assumed that the member code "m1", the team code "t1", and the item code "i3" are stored in the memory of the web server 1.

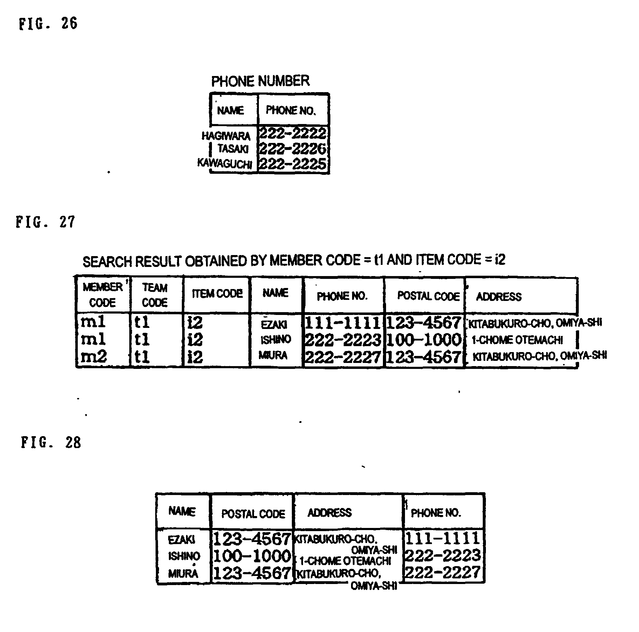

Referring to Fig. 24A, displaying of the shared data is described. In steps S18' and S19', the team code "t1" and the item code "i3" are retrieved from the data table shown in Fig. 17, thus obtaining a search result shown in Fig. 25. The search result shows the shared data available to Mr. "Tanaka" when he uses the "phone directory" function of the "sales" division. Accordingly, the terminal unit 3 displays a screen as shown in Fig. 26.

Referring to Fig. 24B, addition to the shared data is described. In step S20', Mr. "Tanaka" inputs a name "Ishii" and a phone number "543-2100" in the input screen. In step S21', the input data is registered along with the member code "m1", the team code "t1", and the item code "i3" as new data in the data table.

Referring to Fig. 24C, editing of the shared data is described. In step S22', data to be edited is designated from a list of phone numbers shown in Fig. 26. When editing data concerning "Hagiwara", an edition screen is displayed in step S23' because the member code "m1" included in the data on "Hagiwara" matches the member code of the user, namely, Mr. "Tanaka". In contrast, when editing data concerning "Tasaki", the member code "m2" included in the data on "Tasaki" does not match the member code of the user, namely, Mr. "Tanaka". Hence, Mr. "Tanaka" is not permitted to edit the data, and the edition screen is not displayed.

A specific example in which two functions are used to share the data table is described. The details of processing are the same as those in the above example, and descriptions thereof are omitted. Each function is executed by the corresponding service item program.

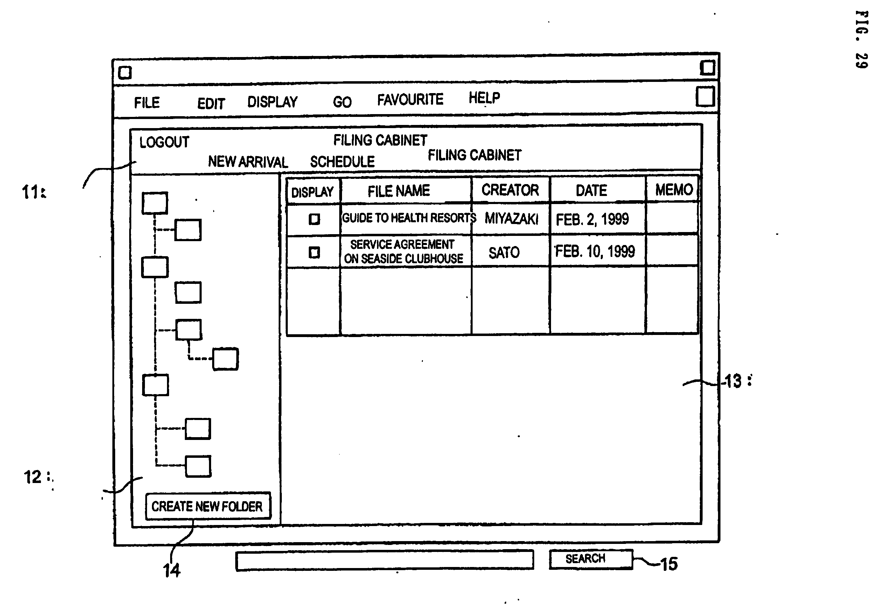

The data table shown in Fig. 17 stores data on the "phone directory" function identified by the item code "i3" and data on the "address" function identified by the item code "i2". The "address" function is registered in the "management strategy" division which is identified by the team code "t5". Since Mr. "Tanaka" identified by the member code "m1" also belongs to the "management strategy" division, he is permitted to gain access to the "address" information. Retrieval of the team code "t1" and the item code "i2" from the data table shown in Fig. 17 gives a search result shown in Fig. 27. Accordingly, the data table can be shared using a plurality of functions. Fig. 28 shows an example of a display screen of the terminal unit 3.

Fig. 29 shows an example of an input/output screen of the terminal unit 3. Hereinafter the input/output screen and information or a program for forming the input/output screen are referred to as a "filing cabinet". Inputting and outputting of shared information including image information by the information sharing system are described.

In the following description, it is assumed that the platform program verifies the originator of shared information, and subsequently the filing cabinet is transferred to the terminal unit 3 and displayed by the terminal unit 3. The filing cabinet includes a menu field 11 which includes various menus, a file classification folder displaying field 12 for classifying shared information, and a file list/content displaying field 13 for displaying a list of shared information and the content of shared information.

### (1) Uploading of shared information by the user

When shared information input to the filing cabinet by the user is transferred from the terminal unit 3 to the web server 1, the platform program sends the shared information to the service item program corresponding to the filing cabinet.

When the user selects a folder (directory) displayed on the file classification folder displaying field 12 of the filing cabinet, the terminal unit 3 displays a shared information inputting form as a window (not shown) on the filing cabinet. Using this form, the user designates a file to be uploaded and inputs data to be appended. The content of the uploaded file is displayed on the file list/content displaying field 13. Alternatively, when designating (selecting) the folder to which the shared information is uploaded, a create-new-folder button 14 may be designated, thereby creating a new folder used for uploading.

In the description, "designation" and "selection" are performed by clicking a mouse or by inputting from a keyboard.

When the service item program receives the shared information from the platform program, the service item program stores the shared information in the folder (directory) of the DB server 2, which is designated by the user.

### (2) Downloading of shared information by the user

When the platform program receives a request to display a file list from the filing cabinet of the terminal unit 3, the platform program refers to the database of the DB server 2 through the service item program corresponding to the filing cabinet, and sends data on the file list to the terminal unit 3.

The request to display the file list is transmitted from the filing cabinet to the web server 1 when the user selects a folder (directory) displayed on the file classification folder displaying field 12 of the filing cabinet. The data on the file list transferred from the web server 1 to the terminal unit 3 is displayed on the file list/content displaying field 13 of the filing cabinet.

When the platform program receives a request to download a file from the filing cabinet of the terminal unit. 3, the platform program obtains a file designated by the database of the DB server 2 through the service item program corresponding to the filing cabinet and transfers the obtained file to the terminal unit 3.

The request to download the file is sent from the filing cabinet to the web server 1 when the user selects a file from the file list displayed on the file list/content displaying field 13 of the filing cabinet. Alternatively, the selection can be made by creating a reading field (not shown) in the file list and by having the user designate the reading field. The content of the file transferred from the web server 1 to the terminal unit 3 is displayed on the file list/content displaying field 13 of the filing cabinet.

### (3) Retrieval of shared information by the user

In response to the receipt of a file retrieval request including search conditions from the filing cabinet of the terminal unit 3, the platform program searches the database of the DB server 2 through the service item program corresponding to the filing cabinet and sends a search result to the terminal unit 3.

When a search button 15 is designated, a search form as a window (not shown) is displayed on the filing cabinet. The user inputs a search character string as the search conditions in an input region of the search form and designates a send button (not shown) on the search form, thus transferring the file retrieval request including the search conditions to the web server 1. When the user designates, prior to designating the search button 15, a folder to be searched in the file classification folder displaying field 12, only the designated folder is searched. When no folder is designated by the user, all folders are searched.

The inputting and outputting of the shared information using the filing cabinet are described as above.

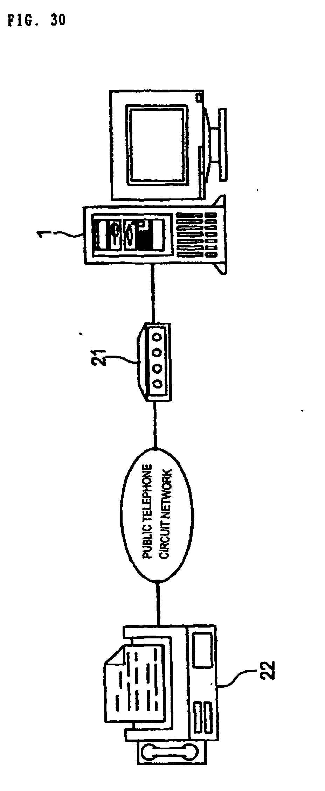

An information sharing system according to a third embodiment of the present invention is described with reference to Fig. 30.

According to the third embodiment, a modem 21 is connected to the web server 1 of the second embodiment. Also, a facsimile machine 22 is connected via a public telephone circuit network.

In operation, the platform program of the web server 1 receives identification data from the facsimile machine 22, and verifies the originator. When it is determined that the identification data is not valid, the connection is broken.

The identification data includes a team code, a member code, and a password. The identification data is transmitted to the web server 1 by, for example, a touch-tone operation using touch-tone lines. The verification processing is similar to that in the second embodiment.

When it is determined that the identification data is valid, the platform program specifies the storage location of data to be transmitted from the facsimile machine 22, and receives shared information from the facsimile machine 22.

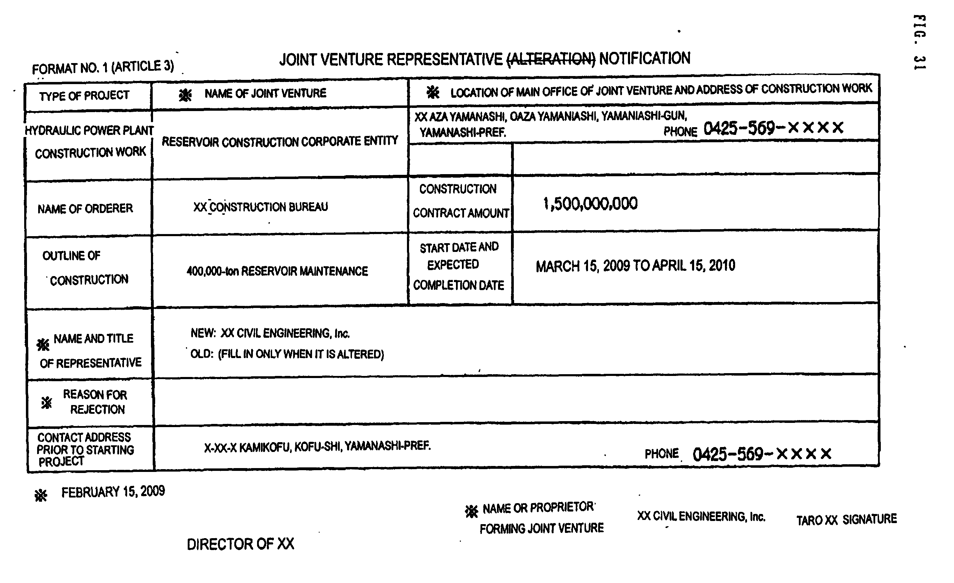

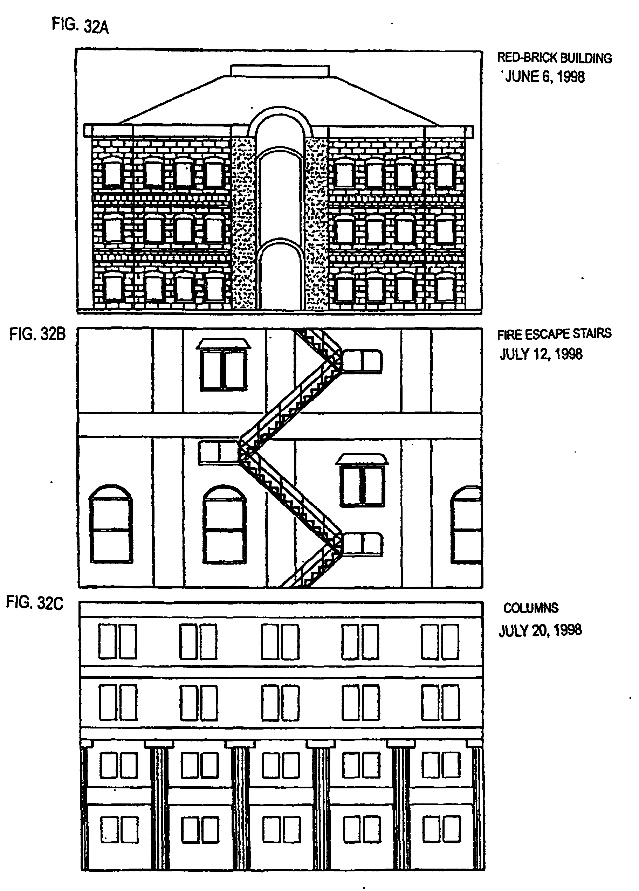

The platform program stores the received shared information as an image file or a file in a format which is separately determined in the DB server 2 through a service item program according to the third embodiment. The shared information sent from the facsimile machine 22 includes a form document or a photograph. Fig. 31 shows an example of a form document. Figs. 32A to 32C show examples of form documents including photographs which are schematically illustrated therein.

The shared information stored in the DB server 2 can be read in a manner similar to reading the shared information in the information sharing system of the second embodiment.

According to the third embodiment, it is possible to share a paper form document in a predetermined format or a photograph obtained at a remote location.

The information sharing system of the third embodiment is described as above.

According to the information sharing system, the following advantages are achieved.
(1) Since data is stored using identifiers, the table structure of a database for storing shared information can be further separated from an application program used to provide information. This reduces alterations in the database structure when changing the application part, and enhances flexibility in adding or altering functions.
(2) Since tables are shared by a plurality of information providing units, alternations in the database structure caused by addition to the information providing units are reduced. By sharing the tables, an increase in the number of tables is suppressed, and the shared information is easily managed.
(3) From an input/output screen of a terminal unit displayed by input/output screen displaying information, the shared information can be stored in an information accumulating device by designating a directory in which the shared information is stored and by inputting/sending addition data. The shared information can be read by designating the directory in which the shared information is stored and by designating a file to be read. It is thus possible to use the shared information in a simple manner.
(4) Since a generally-used facsimile machine is employed as an input device to input the shared information, the cost is reduced. It is also possible to share a paper form document or a photograph obtained at a remote location.

The information sharing system in which the information sharing apparatus of the present invention is incorporated is described in detail as above. By incorporating the information sharing apparatus of the present invention in the information sharing system, an electronic document can be approved in the information sharing system without printing the electronic document on paper.

Although the above embodiments use the Internet, a local area network (LAN) or a dial-up network can be used.

A "computer system" covers a home-page providing (displaying) environment as long as it uses a world wide web (WWW) system.

A "computer-readable recording medium" includes a portable medium, such as a floppy disk, a magneto-optical disk, a ROM, or a CD-ROM, or a storage device such as a hard disk included in the computer system. The "computer-readable recording medium" further includes a transmission medium or a transmission wave that dynamically stores a program for a short period of time, such as a communication line employed to send a program via networks, such as the Internet and telephone lines. Also, the "computer-readable recording medium" includes a storage device that stores a program for a predetermined period of time, such as a volatile memory in the computer system which may be used as a server or a client.

The programs described above may cause the computer to execute some of the above functions. Alternatively, the programs may include differential files, i.e., differential programs, which are combined with a program that has been recorded in advance in the computer system, thereby performing the functions.

While the preferred embodiments of the present invention are described with reference to the accompanying drawings, it is to be understood that various changes and modifications may be made without departing from the scope of the invention.

## Claims

1. An information sharing apparatus for sharing information formed by an electronic document, comprising:
information sharing means for providing an information sharing environment to one of a terminal unit included and a terminal unit connected to said information sharing apparatus; and
storage means for associating at least one piece of shared information with a plurality of information sharers who share the shared information and for storing a shared information table including a plurality of first identifiers provided for each association;
wherein, when said information sharing means receives an input from one information sharer and said input sets one of the first identifiers, said information sharing means prohibits alteration of the shared information corresponding to the first identifier.

2. An information sharing apparatus according to Claim 1, wherein:
said information sharing means gives, when the first identifier is set, a first permission to the information sharer who first created the shared information; and
said information sharing means prohibits, when the first identifier corresponding to another information sharer is subsequently set by the other information sharer, canceling of the former setting of the first identifier performed by the information sharer who formerly set the first identifier.

3. An information sharing apparatus according to Claim 2, wherein:
said storage means associates the information sharers with the shared information created by the information sharers and further stores a file information table including a second identifier indicating an approved/not approved state of the shared information according to each shared information; and
said information sharing means refers to the shared information table, and, when all the first identifiers corresponding to the one piece of shared information are set, sets the second identifier corresponding to the shared information.

4. An information sharing apparatus according to Claim 3, wherein:
said storage means further stores a member information table including personal identification information of the information sharers; and
said information sharing means refers to the shared information table, the file information table, and the member information table to determine a permission to allow access to the shared information and manages the shared information based on the correspondence between the shared information and the information sharers who share the shared information included in the shared information table, the correspondence between the information sharers and the shared information created by the information sharers included in the file information table, and the personal identification information included in the member information table.

5. An information sharing apparatus according to any one of Claims 1 to 4, wherein:
said information sharing apparatus can be connected to the Internet; and
said information sharing means provides the information sharing environment to the terminal unit connected via a network.

6. An information sharing method for an information sharing apparatus, comprising:
a storage step of associating at least one piece of shared information with a plurality of information sharers who share the shared information and of storing a shared information table including a plurality of first identifiers provided for each association;
an input step of inputting by the information sharers;
and
a prohibiting step of prohibiting, when one of the first identifiers is set in said input step, alteration of the shared information corresponding to the first identifier.

7. A computer-readable recording medium for causing a computer to execute an information sharing program installed in an information sharing apparatus, said program comprising:
a storage step of associating at least one piece of shared information with a plurality of information sharers who share the shared information and of storing a shared information table including a plurality of first identifiers provided for each association;
an input step of inputting by the information sharers;
and
a prohibiting step of prohibiting, when one of the first identifiers is set in said input step, alteration of the shared information corresponding to the first identifier.
